**Europäisches Patentamt**

**European Patent Office**

**Office européen des brevets**

(19)

(11) Veröffentlichungsnummer: **0 344 194 B1**

# EUROPÄISCHE PATENTSCHRIFT

(12)

(45) Veröffentlichungstag der Patentschrift:
24.07.91 Patentblatt 91/30

(51) Int. Cl.⁵: **G01M 13/00, G01N 3/32**

(21) Anmeldenummer: 88901596.2

(22) Anmeldetag: 15.02.88

(86) Internationale Anmeldenummer:
PCT/EP88/00110

(87) Internationale Veröffentlichungsnummer:
WO 88/06283 25.08.88 Gazette 88/19

(54) **VERFAHREN UND VORRICHTUNG ZUM PRÜFEN VON FAHRZEUG-STABILISATOREN.**

(30) Priorität: 19.02.87 DE 3705268

(43) Veröffentlichungstag der Anmeldung:
06.12.89 Patentblatt 89/49

(45) Bekanntmachung des Hinweises auf die
Patenterteilung:
24.07.91 Patentblatt 91/30

(84) Benannte Vertragsstaaten:
DE FR GB IT SE

(56) Entgegenhaltungen:
EP-A- 0 106 171
EP-A- 0 112 400
Lueser, Lexikon der Technik Bd 12 (1967), s.
629

(73) Patentinhaber:
INDUSTRIEANLAGEN-BETRIEBSGESELLSCHAFT
M.B.H.
Einsteinstrasse 20
W-8012 Ottobrunn (DE)

(72) Erfinder: HÜCK, Manfred
Asternweg 25
W-8011 Vaterstetten (DE)

(74) Vertreter: MEISSNER, BOLTE & PARTNER
Widenmayerstrasse 48 Postfach 860624
W-8000 München 86 (DE)

## Beschreibung

Die Erfindung betrifft ein Verfahren und eine Vorrichtung zum Prüfen von Stabilisatoren nach dem Oberbegriff des Patentanspruches 1 bzw. des Patentanspruches 2.

Für die Entwicklung von Fahrzeugstabilisatoren ebenso wie für die Endkontrolle bei der Fertigung oder die Eingangskontrolle zugekaufter Teile muß man die Fahrzeugstabilisatoren unter wirklichkeitsnahen Belastungsbedingungen dynamisch prüfen. Dies bedeutet insbesondere, daß man die Stabilisatoren z.B. einem Dauertest aussetzt, in welchem üblicherweise bis zu $10^6$ Lastspiele gefahren werden. Die bisher von Kfz.-Herstellern verwendeten Prüfstände für Stabilisatoren umfassen Exzenterantriebe, um die Prüfverformungen entweder gegenphasig in beide Schenkel der Stabilisatoren oder einseitig in einen Schenkel bei fester Einspannung des Gegenschenkels einzuleiten. Diese Art von Antrieb hat zum einen den Nachteil, daß die Versuchsfrequenz kaum 5 Hz übersteigen kann, da sonst die nicht ausgleichbaren Massenkräfte zu extremen Vibrationen des Prüfstandes, des Bodens usw. führen. Die niedrige Frequenz des Lastwechsels führt wiederum zu einer äußerst langen Testdauer am Einzelstück (ca. 50 Stunden für $10^6$ Lastwechsel bei 5 Hz Lastwechselfrequenz), was für die Entwicklung von Stabilisatoren bereits störend ist, eine stichprobenmäßige Überprüfung einer Fertigung jedoch unzulässig verzögert. Ein weiteres Problem der Exzenterantriebe liegt darin, daß auf solchen Prüfständen nur Schwingversuche mit konstanten Amplituden durchgeführt werden können. Um wirklichkeitsnähere Beanspruchungsprofile zu erzielen, bei denen eine Vielzahl verschiedener Amplituden durchlaufen werden, sind servohydraulische Prüfanlagen bekannt. Derartige Prüfanlagen sind aber nicht nur in der Herstellung äußerst teuer, sie erregen auch wegen der unausgleichbaren Massen Vibrationen am Aufstellort und sind im Betrieb sehr kostspielig.

Aus den europäischen Patentanmeldungen 106 171 und 112 400 sind Prüfstände bekannt, in denen Kraftfahrzeug-Bauteile ähnlich wie im vorliegenden Fall überprüft werden sollen. Zum einen sind jedoch die aus diesen Druckschriften bekannten Anordnungen nicht zur Prüfung von Fahrzeug-Stabilisatoren geeignet, zum anderen werden die zu untersuchenden Bauteile über Hilfsmechanismen mit Kräften beaufschlagt, die eine exakte Simulation der im tatsächlichen Betrieb auftretenden Beanspruchungen nicht ermöglichen.

Ausgehend vom oben genannten Stand der Technik, ist es Aufgabe der vorliegenden Erfindung, Verfahren und Vorrichtung der eingangs genannten Art dahingehend weiterzubilden, daß Stabilisatoren auf einfache, kostengünstige Art erheblich schneller als bisher geprüft werden können.

Diese Aufgabe wird verfahrensmäßig dadurch gelöst, daß die Schenkel eines zu prüfenden Stabilisators zusammen mit daran angekoppelten, bewegbaren Massenelementen bei der Resonanzfrequenz des Masse-Feder-Systems zu gegenphasigen Schwingungen um einen festen Nullpunkt angeregt werden. Die zur Lösung der gestellten Aufgabe geeignete Vorrichtung zeichnet sich dadurch aus, daß die Antriebsmittel bewegbare Massenelemente zur Bildung eines Masse-Feder-Resonators umfassen, die derart ausgebildet, beweglich angeordnet und jeweils mit einem Schenkel des Stabilisators verbunden sind, daß sie über einen angekoppelten Schwingerreger zusammen mit den Stabilisatorschenkeln in Schwingungen bringbar sind, deren Frequenz durch die Masse der Massenelemente und die Federkraft des Stabilisators bestimmt ist.

Im Prinzip dreht es sich also bei der Erfindung darum, daß man durch die Ankopplung jeweils einer Masse an jedem Schenkel ein in sich abgeschlossenes, schwingungsfähiges System aufbaut, dessen einer Teil (nämlich die Feder) der Prüfling und dessen andere Teile zwei in der Prüfvorrichtung angeordnete Teile sind. Bei dieser Lösung muß der Schwingerreger lediglich die im System auftretenden Verluste kompensieren, die sich aus der durch die benutzte Vorrichtung ergebenden Reibung, Luftdämpfung und der Materialdämpfung zusammensetzen. Der entstehende Energiebedarf ist somit äußerst gering (unter 1 kW für die Prüfung eines Stabilisators für einen Mittelklasse-Pkw).

Als Schwingerreger eignet sich wegen seiner guten Regelbarkeit besonders ein Scheibenläufermotor, der ein über eine Welle um eine Achse drehbar gelagertes Massenelement hin- und herdreht, an dem ein Ende des Stabilisatorschenkels befestigt ist. Der andere Stabilisatorschenkel ist mit einem zweiten, ebenso drehbar beweglichen Massenelement gekoppelt, das so ausgestaltet ist, daß es gegenphasig zum ersten Massenelement schwingen kann, so verdoppelt sich die Gesamt-Belastungsamplitude des Stabilisators bei gleichbleibender Schwingamplitude (Drehwinkel) des Schwingerregers bzw. des ersten Massenelementes. Hierbei müssen die Trägheitsmomente auf beiden Seiten (von der Mitte des Prüflings aus gesehen) gleich groß sein.

Bei einer bevorzugten Ausführungsform der Erfindung versieht man die Massenelemente mit Ausgleichsmassenelementen, die auf der zur Lagerachse gegenüberliegenden Seite der Massenelemente angeordnet und hinsichtlich ihrer Abmessungen derart ausgestaltet sind, daß die Massenelemente im wesentlichen um ihre Drehachse statisch ausgewuchtet sind. In diesem Fall haben also die Massenelemente zusammen mit den Ausgleichsmassen rein rotatorisch wirkende Massenträgheitsmomente, die sich gegenseitig derart kompensieren, daß keine Schwingungen nach außen (auf den Aufstellboden) übertragen werden.

Bei den vorgenannten Lösungen, bei denen die Massenelemente jeweils gelagert sind, kann selbstverständlich auch eine Torsionsfeder (Drehstab) anstelle eines Stabilisators geprüft werden, wobei dann die Kopplungsmittel zwischen den Massenelementen und den Enden der Torsionsfeder entsprechend ausgestaltet sein müssen.

Bei einer anderen bevorzugten Ausführungsform der Erfindung sind die Massenelemente nicht gelagert, sondern jeweils über Befestigungselemente direkt an Befestigungsenden der Stabilisatorschenkel drehbar angebracht. Dadurch wird die Einleitung einer momentenfreien Kraft wie im Fahrzeug gewährleistet. Der Schwingerreger ist hierbei über Kopplungsmittel mit einem Stabilisatorschenkel verbindbar. Vorzugsweise umfassen hierbei die Kopplungsmittel einen, mit seinem einen Ende am Stabilisatorschenkel festlegbaren Koppelhebel, der mit seinem anderen Ende in einem Lager um eine Achse schwenkbar gehalten ist, die senkrecht zu einer Mittelachse durch die ortsfesten Lagermittel verläuft und diese schneidet, wobei das Lager mit einem hin- und herdrehenden Schwingerreger verbunden ist, dessen Drehachse mit der Mittelachse fluchtet. Bei dieser Anordnung ist die Anpassung der Vorrichtung auf verschiedene Formen von Stabilisatoren besonders leicht möglich und die Konstruktion der Anordnung wird durch den Fortfall der zwei Lager für die Massenelemente vereinfacht.

Erfindungsweiterbildende Merkmale ergeben sich aus den abhängigen Patentansprüchen und der nachfolgenden Beschreibung einer bevorzugten Ausführungsform der Erfindung, die anhand von Abbildungen näher erläutert wird. Hierbei zeigen :

Fig. 1   eine schematisierte, teilgeschnittene Seitenansicht der Vorrichtung ;
Fig. 2   einen Längsschnitt entlang der Linie II-II aus Fig. 1 ;
Fig. 3   einen Teil-Längsschnitt entlang der Linie III-III aus Fig. 2 ;
Fig. 4   eine teilgeschnittene Seitenansicht eines Massenelement-Endabschnittes mit Kopplungselement ;
Fig. 5   einen Teil-Längsschnitt durch das Oberteil eines Lagerelementes entlang der Linie V-V aus Fig. 6;
Fig. 6   eine Vorderansicht entlang der Linie VI-VI aus Fig. 5 ;
Fig. 7   eine Teil-Seitenansicht einer weiteren bevorzugten Ausführungsform der Vorrichtung ;
Fig. 8   eine Ansicht entlang der Linie VIII-VIII aus Fig. 7 ; und
Fig. 9   ein schematisiertes Blockschaltbild der elektrischen Schaltung des Gesamtsystems.

Bei der folgenden Beschreibung werden für gleiche oder äquivalente Teile dieselben Bezugsziffern verwendet.

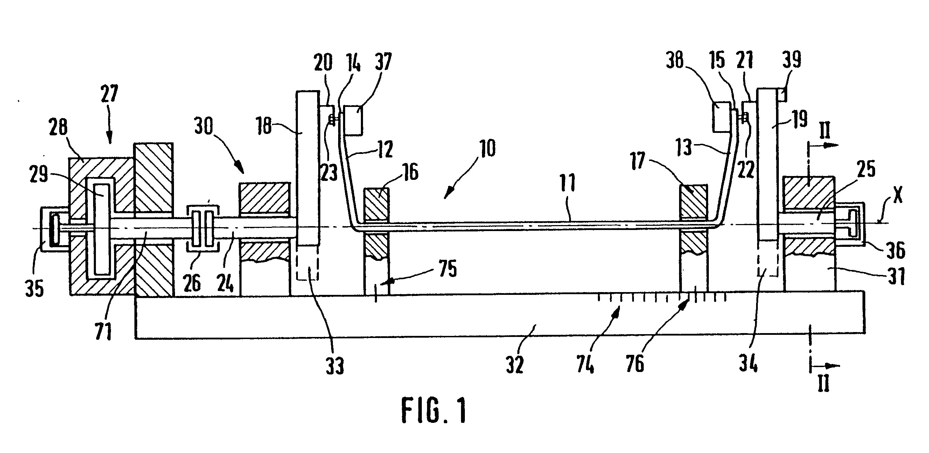

Wie in Fig. 1 gezeigt, umfaßt das hier gezeigte Ausführungsbeispiel der Vorrichtung ein Maschinenbett 32, auf dem zwei Lager 16, 17 festgesetzt sind, in denen ein zu prüfender Stabilisator 10 an den Stellen seines Mittelabschnittes 11 drehbeweglich gelagert ist, an denen der zu prüfende Stabilisator 10 auch im eingebauten Zustand am Fahrzeugrahmen gelagert ist.

Weiterhin sind auf dem Maschinenbett 32 Massenelement-Lager 30 und 31 festgesetzt, in denen jeweils ein im wesentlichen stabförmiges Massenelement 18 bzw. 19 mit seiner Welle 24 bzw. 25 drehbeweglich gelagert ist. Die Wellen 24, 25 der Massenelemente 18, 19 weisen eine gemeinsame Drehachse X auf, welche gleichzeitig die durch die Stabilisator-Lager 16, 17 verlaufende Mittelachse darstellt.

Die eine Massenelement-Welle 24 ist über eine Wellenkupplung 26 mit der Motorwelle 71 eines Scheibenläufermotors 27 drehfest verbunden, dessen scheibenförmiger Rotor 29 auf der Motorwelle 71 festgesetzt ist und dessen Stator 28 am Maschinenbett 32 befestigt ist.

Die Massenelemente 18 und 19 sind über Kopplungselemente 20, 21 und Befestigungsbolzen 22, 23 mit den Befestigungsenden 14, 15 des Stabilisators 10 verbunden. Diese Kopplungselemente 20, 21, die weiter unten näher beschrieben werden, sind so ausgestaltet, daß sie lediglich Kräfte übertragen können, die in der zur Drehachse X normalen Ebene wirken, während Kräfte parallel oder senkrecht zur Drehachse X lediglich zu einer Verformung in den Kopplungselementen 20, 21 führen.

An den Befestigungsenden 14, 15 des zu prüfenden Stabilisators 10 sind weiterhin Abstimm-Massen 37, 38 angeordnet, die (zusätzlich zu den Massenelementen 18, 19) die Resonanzfrequenz des Systems bestimmen.

An dem Massenelement 19, das nicht mit dem Scheibenläufermotor 27 gekoppelt ist, ist eine Kompensationsmasse 39 angebracht, die derart bemessen ist, daß die Gesamt-Massenträgheitsmomente auf beiden Seiten des Stabilisators 10 gleich sind. Da die Massenträgheitsmomente der Wellen 24 und 25 im wesentlichen gleich und diejenigen der Kupplung 26 und der Motorwelle 71 fast vernachlässigbar sind, kompensiert somit die Kompensationsmasse 39 im wesentlichen das Massenträgheitsmoment des Rotors 29 des Scheibenläufermotors 27.

Wie in Fig. 1 weiterhin gezeigt, sind mit jeder Massenelementen-Welle 24 bzw. 25 Winkelgeber 35 bzw. 36 gekoppelt, über deren Ausgangssignale die jeweilige Winkelposition (relativ zur Drehachse X) der Massenelemente 18 bzw. 19 und damit der Schenkel 12 bzw. 13 des zu prüfenden Stabilisators 10 meßbar sind.

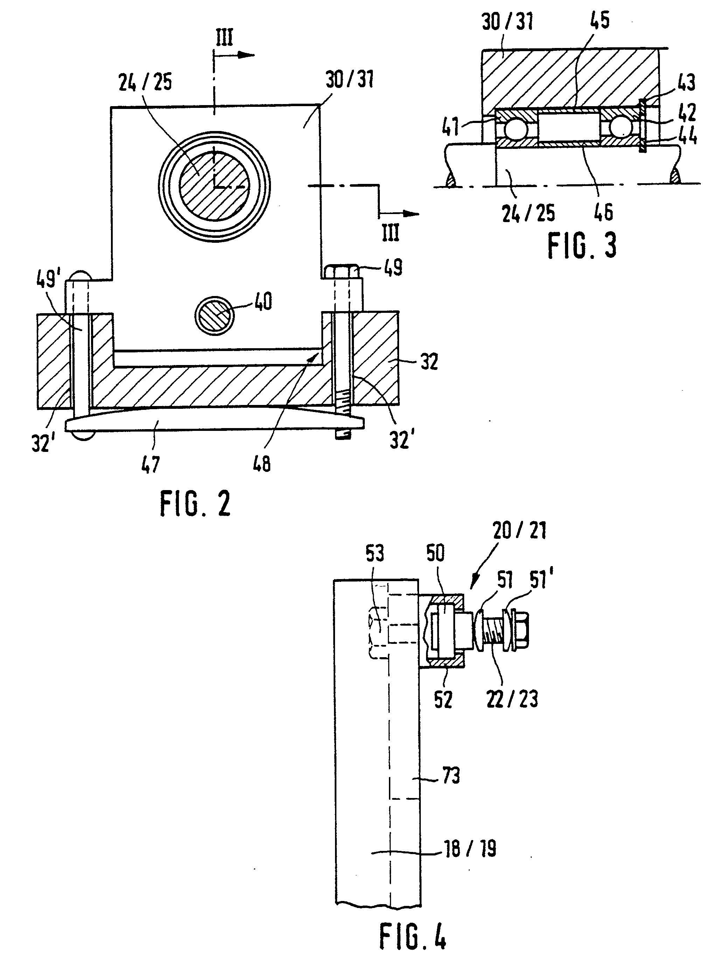

Im folgenden werden anhand der Figuren 2 und 3 die Massenelement-Lager 30 und 31 näher beschrieben, die im wesentlichen gleichartig bzw. identisch ausgeführt sind.

Jedes der Massenelement-Lager 30 bzw. 31 weist eine Bohrung auf, in der zwei über Distanzhülsen 45, 46 voneinander in Abstand gehaltene Wälzlager 41, 42 sitzen, die auf der zu lagernden Welle 24 bzw. 25 im Massenelement-Lager 30 bzw. 31 über Sicherungsringe 43, 44 gehalten sind. Die Massenelemente-Lager 30, 31 sind jeweils in einer Führung 48 im Maschinenbett 32 längsverschiebbar gelagert, wobei zur Verschiebung gegebenenfalls eine Spindel 40 mit motorischem Antrieb vorgesehen sein kann. Das Maschinenbett 32 weist auf beiden Seiten der Führung 48 Langlöcher 32' auf, die derart ausgestaltet sind, daß mit ihrem einen Ende am jeweiligen Massenelement-Lager 30 bzw. 31 befestigte Feststellbolzen 49, 49' durch die Langlöcher 32' hindurchragen können, wobei die unter dem Maschinenbett 32 liegenden Enden der Feststellbolzen 49, 49' über einen Wippbalken 47 miteinander verbunden sind. Der eine Bolzen 49' muß nicht verstellbar sein, während der andere Bolzen 49 mit seinem unteren Ende in einer entsprechenden Gewindebohrung im Wippbalken 47 sitzt, so daß bei Festziehen des Bolzens 49 der Wippbalken 47 an das Maschinenbett 32 herangezogen und das Massenelement-Lager 30 bzw. 31 auf diesem festgesetzt wird.

Diese Ausgestaltung der Führung eignet sich auch besonders gut für die Stabilisator -Lager 16, 17, wobei eines der Lager (in Fig. 1 das Lager 17) vorzugsweise mit einer Meßmarke 76 versehen ist, der gegenüber am Maschinenbett 32 ein Maßstab 74 sitzt. Das andere Lager 16 ist mit einer Null-Marke 75 auf dem Maschinenbett 32 fest angeordnet, wobei der Maßstab 74 die Entfernung zwischen den Marken 75 und 76 bzw. zwischen den Lagern 16 und 17 wiedergibt. Das Lager 17 ist über eine Spindel mechanisch oder elektromotorisch verstellbar, so daß die Anordnung sehr leicht und genau auf den Prüfling einge stellt werden kann.

Das Kopplungselement 20 bzw. 21, das in Fig. 1 als L-förmiges Blech angedeutet ist, wird vorzugsweise in der in Fig. 4 gezeigten Art ausgebildet. Hierbei sind die Massenelemente 18 bzw. 19 mit einem über einen Teil ihrer Länge (radial zur Achse X) verlaufenden Langloch 73 versehen, so daß ein Schlitten 52 über einen Befestigungsbolzen 53 am jeweiligen Massenelement 18 bzw. 19 mit variablem Abstand zur Drehachse befestigt werden kann. Im Schlitten 52 ist ein Wälzlager 50 mit seinem Außenring gehalten, in dessen Innenring ein Befestigungsbolzen 22 bzw. 23 einschraubbar ist, um das mit einer entsprechenden Bohrung versehene Befestigungsende 14 bzw. 15 eines Stabilisatorschenkels 12 bzw. 13 mit dem dazugehörigen Massenelement 18 bzw. 19 zu verbinden. Um beim Festziehen des Bolzens 22 bzw. 23 ein Verspannen des Stabilisatorschenkels zu vermeiden, sind Kugelscheiben 51, 51' auf beiden Seiten des Befestigungsendes 14 bzw. 15 des Stabilisators zwischengelegt. Durch diese Ausbildung der Kopplungselemente 20, 21 lassen sich die wesentlichen Verformungen des Stabilisatorschenkels, welche das Testergebnis beeinflussen könnten, auffangen.

Im folgenden werden die Lager 16, 17 näher beschrieben, über welche der zu prüfende Stabilisator 10 auf dem Maschinenbett 32 gelagert ist.

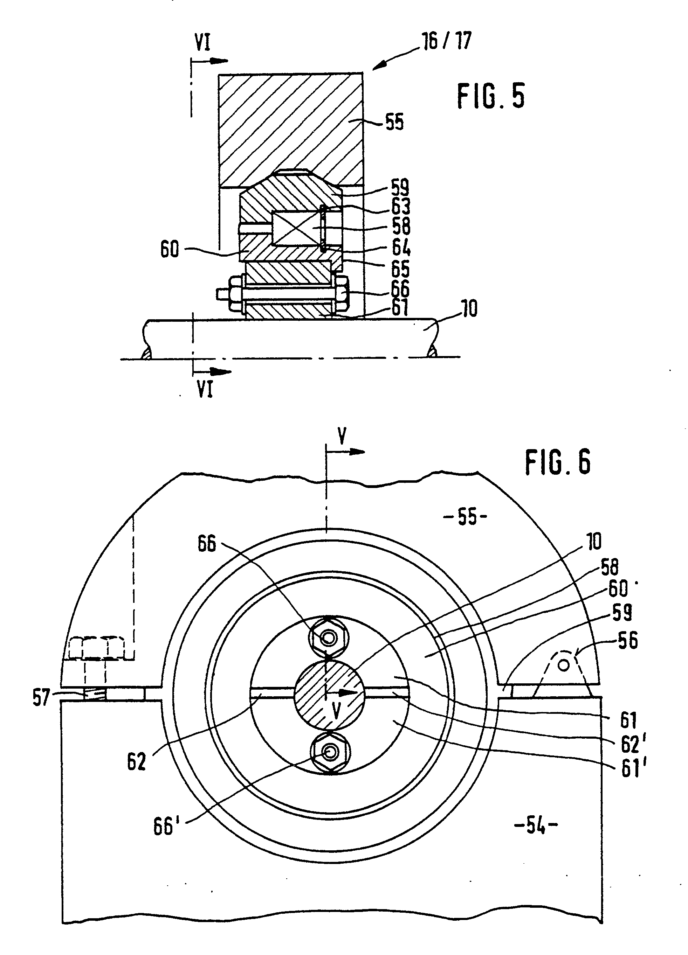

Wie in den Fig. 5 und 6 gezeigt, umfassen die Lager jeweils Pendelrollenlager 58, die einen Außenring 59 mit einem Innenring 60 drehbar verbinden. Im Innen- bzw. Außenring ist das Lager 58 über Spannringe 63, 64 festgesetzt, so daß der Außenring 59 mit dem Innenring 60 auch in Axialrichtung fest aber drehbar verbunden ist.

Zwischen dem Innenring 60 und den Stabilisator 10 sind zwei Halb-Haltescheiben 61, 61' eingesetzt, die (vorzugsweise mittig) jeweils eine Bohrung aufweisen, in denen Spannbolzen 66, 66' sitzen. Der Außen- und der Innendurchmesser der Haltescheiben 61, 61' ist so bemessen, daß dann, wenn die Spannbolzen 66, 66' nicht festgezogen sind, die Haltescheiben 61, 61' in den Raum zwischen Stabilisator 10 und Innenring 60 einschiebbar sind, bis sie an einem radial nach innen ragenden Bund 65 am Innenring 60 anschlagen. Die Haltescheiben 61, 61' sind aus einem elastisch verformbaren Kunststoff gefertigt, so daß beim Festspannen der Spannbolzen 66, 66' das Material der Haltescheiben 61, 61' radial nach außen und nach innen ausweicht und so die Haltescheiben 61, 61' sich zwischen den Innenring 60 und den Stabilisator 10 einspreizen. Durch die Materialwahl wird nicht nur diese äußerst einfach zu montierende und zu demontierende Halterung geschaffen, es wird vielmehr auch jeglicher Reibverschleiß auf dem Prüfling vermieden, der bei metallischer Lagerung unvermeidbar wäre.

Der Außenring 59 der Anordnung weist vorzugsweise einen sich stumpf-kegelförmig verringernden Querschnitt auf, so daß der Außenring 59 in einer entsprechend ausgebildeten Nut mit hohlkegelförmigem Querschnitt in einem Sockel 54 bzw. einer Kappe 55 eines Lagerbocks festgespannt werden kann. Die Kappe 55 ist über ein Gelenk 55 mit dem Sockel 54 auf der einen Seite und auf der anderen Seite über einen Spannbolzen 57 verbunden. Diese Möglichkeit des Herauslösens des Lagers 58-60 ist mindestens für ein Lager (16 oder 17) notwendig, während das Lager 58 bis 60 jeweils im anderen Lager 16 bzw. 17 fest angeordnet sein kann, so daß man einen zu prüfenden Stabilisator 10 zunächst in das eine Lager einfädelt, dann das Lager 56 bis 60 auf das andere Ende auffädelt, bis zur richtigen Position im geöffneten zweiten Lagerbock schiebt und schließlich die Kappe 55 dieses Lagers mit dem Sockel 54 über den Spannbolzen 57 verbindet. Abschließend werden die Haltescheiben 61, 61' eingesetzt und die Bolzen 66 festgespannt.

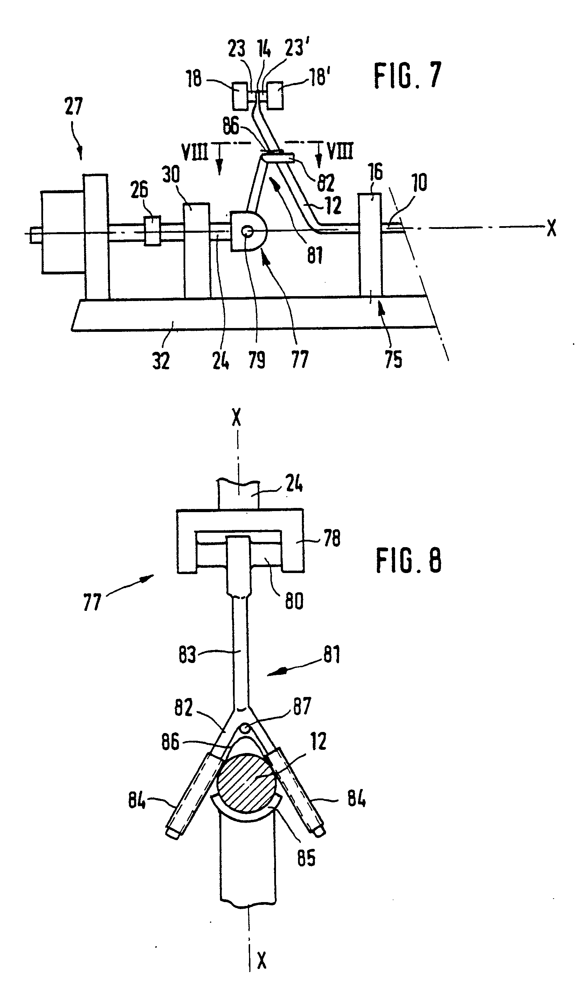

Im folgenden wird eine weitere bevorzugte Ausführungsform der Erfindung anhand der Fig. 7 und 8 näher erläutert.

Der wesentliche Unterschied zu der zuvor gezeigten Anordnung liegt darin, daß die Massenelemente 18 bzw. 19 hier nicht gelagert sind, sondern direkt an die Befestigungsenden 14 bzw. 15 angeschraubt sind. In Fig. 7 ist nur eine Seite des Stabilisators gezeigt, wobei die andere Seite bzw. der andere Schenkel mit gleichartigen Massenelementen verbunden ist.

Um möglichst gleichförmige Kräfte auf die Stabilisatorschenkel 12 bzw. 13 wirken zu lassen, ist es von Vorteil, wenn die Massenelemente zweigeteilt sind, wie dies in Fig. 7 gezeigt ist, wobei zwischen den Teil-Massenelementen 18, 18' und dem jeweiligen Befestigungsende 14 (bzw. 15) des Stabilisatorschenkels 12 (bzw. 13) Lager 23, 23' vorgesehen sind.

Die Schwingerregung erfolgt bei dieser bevorzugten Ausführungsform über einen Koppelhebel 81, der an einem Ende in einem Lager 77 sitzt. Das Lager 77 weist eine relativ breite Lagergabel 78 auf, in welcher eine Lagerachse 80 und von dieser hervorstehend ein Arm 83 befestigt ist. Die Gabel 78 ist auf der Welle 24 so befestigt, daß die Drehachse X der Welle 24 durch die Drehachse des Lagers 77 rechtwinkelig diese schneidend verläuft. Der Arm 83 weist somit einen Drehpunkt 79 auf, der mit dem Schnittpunkt der Achse X und der Drehachse des Lagers 77 zusammenfällt.

An seinem, dem Lager 77 gegenüberliegenden Ende geht der Arm 83 in eine V-förmige Gabel 82 über, deren Schenkel jeweils mit einem Schutzschlauch 84 aus Kunststoff überzogen sind. Die Gabel 82 ist vorzugsweise gegenüber dem Arm 83 gekröpft. Bei dieser Anordnung kann man nun zum Einspannen eines Prüflings 10 zunächst den Koppelhebel 81 nach hinten (in Fig. 7 nach links) klappen, um dann nach dem Einspannen den Koppelhebel 81 derart wieder nach vorne (in Fig. 7 im Uhrzeigersinn) zu schwenken, daß der Stabilisatorschenkel 12 in der Gabel 82 zu liegen kommt, woraufhin man den Koppelhebel 81 über eine Spannbrücke 85 und ein Spannband 86, das in einer Nase 87 am Koppelhebel 81 eingehängt werden kann, mit dem Schenkel 12 verbindet. Der Koppelhebel 81 wird vorzugsweise aus Leichtmetall gefertigt, so daß die Anordnung nur ein geringes Massenträgheitsmoment aufweist. Durch diese Ausbildung der Erfindung ist eine Erhöhung der Resonanzfrequenz des Systems und ein leichteres Wechseln von Prüflingen erzielbar. Falls nötig, kann man auf der anderen, in Fig. 7 nicht gezeigten Seite des Stabilisators 10 einen "Blind-Koppelhebel" vorsehen, der ebenfalls gelagert ist und ein Trägheitsmoment aufweist, das demjenigen auf der Antriebsseite entspricht. An diesem "Blind-Koppelhebel" auf der anderen Seite kann wie bei der Ausführungsform nach Fig. 1 ein zweiter Drehwinkelgeber vorgesehen sein. Die Lager 16 und 17 sind, wie zu Fig. 1 beschrieben, einstellbar.

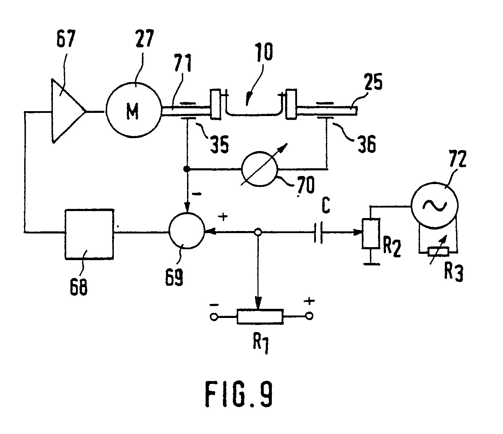

Im folgenden wird das Grundprinzip des Antriebs der beschriebenen Vorrichtung anhand der Fig. 9 näher beschrieben, wobei die Einzelelemente der Anordnung bekannt sind.

Der Motor 27 wird über einen Servoverstärker 67 mit Strom versorgt, an dessen Steuereingang der Ausgang eines Reglers 68 liegt. Der Regler 68 steht mit seinem Eingang mit dem Ausgang eines Vergleichers 69 in Verbindung, an dessen positivem Eingang ein Sollwert ansteht, der mit dem Ausgangssignal des Winkelgebers 35 über den invertierenden Vergleichereingang verglichen wird. Je nach dem am Sollwert-Eingang (+) stehenden Wert dreht somit die Ausgangswelle 71 des Motors 27 auf einen bestimmten Winkelbetrag.

Der Sollwert-Eingang des Vergleichers 69 steht über einen Kondensator C und ein Amplituden-Regelpotentiometer R2 mit dem Ausgang eines Sinusgenerators 72 in Verbindung, dessen Ausgangsfrequenz über ein Stellglied R3 einstellbar ist. Weiterhin ist auf den Sollwert-Eingang (+) des Vergleichers 69 ein über ein Einstellorgan R1 einstellbares Gleichstrompotential geführt.

Zwischen die Ausgänge der beiden Winkelgeber 35 und 36 ist ein Meßorgan 70 geschaltet, wobei die Anordnung derart getroffen ist, daß die Phasenlage zwischen den Ausgangssignalen der beiden Winkelgeber 35 und 36 meßbar bzw. anzeigbar ist.

Beim Prüfen eines Stabilisators 10 geht man (nach den oben beschriebenen mechanischen Vorbereitungen) so vor, daß man zunächst über das Einstellorgan R1 die Ruheposition einstellt, in welcher die Schenkel 12 und 13 des Stabilisators 10 im wesentlichen vertikal nach oben ragen. Daraufhin stellt man über das Einstellorgan R3 die Ausgangsfrequenz des Sinusgenerators 72 (bei geringer Amplitude) auf die Resonanzfrequenz des Systems ein, die dann erreicht ist, wenn das Ausgangssignal des Winkelgebers 35 um 180° zum Ausgangssignal des Winkelgebers 36 verschoben ist. Daraufhin kann die gewünschte Amplitude eingestellt werden, wobei die Einstellung nicht nur von Hand (über das Einstellorgan R2), sondern auch "programmgesteuert" über ein Standardprogramm erfolgen kann nach welchem verschiedene Belastungsamplituden nacheinander durchgefahren werden.

Zur Einstellung der Resonanzfrequenz sind bei einer anderen Ausführungsform keine Drehwinkelgeber vorgesehen, deren Phasenlage zueinander gemessen wird, sondern ein rückgekoppelter Regelkreis, der zusammen mit dem angekoppelten Masse-Feder-Masse System einen geschlossenen Schwingkreis bildet, wobei der dem Motor 27 zugeführte Strom als Regelgröße verwendbar ist, da dieser bei Erreichen der Resonanzfrequenz minimal wird. Zur Einstellung der Nullpunktlage genügt dann ein einziger Drehwinkelgeber am Motor 27.

## Patentansprüche

1. Verfahren zum Prüfen von Farzeug-Stabilisatoren, die an ortsfesten Lagern eingespannt und deren Schenkel durch Schwingerreger gegeneinander (dreh-) bewegt werden, wobei die Schenkel zusammen mit daran angekoppelten, bewegbaren Massenelementen bei der (ersten) Resonanzfrequenz des Masse-Feder-Systems zu gegenphasigen Schwingungen um einen festen Nullpunkt durch den Schwingerreger angeregt werden.

2. Vorrichtung zum Prüfen von Fahrzeug-Stabilisatoren, mit ortsfesten Lagermitteln zum Einspannen eines Stabilisators und mit Antriebsmitteln zum (Dreh-) Bewegen eines Stabililatorschenkels relativ zum anderen Stabilisatorschenkel, in welcher die Antriebsmittel zwei bewegbare Massenelemente (18, 19) zur Bildung eines Masse-Feder-Resonators umfassen, die derart ausgebildet, beweglich angeordnet und von denen jeweils eines mit einem Schenkel (12, 13) des Stabilisators (10) derart verbunden ist, daß sie über einen angekoppelten Schwingerreger (27) zusammen mit den Stabilisatorschenkeln (12, 13) in gegenphasige Schwingungen bringbar sind, deren Frequenz im wesentlichen durch die Massen der Massenelemente (18, 19) und die Federkraft das Stabilisators (10) bestimmt ist.

3. Vorrichtung nach Anspruch 2, **dadurch gekennzeichnet**, daß die Massenelemente (18, 19) jeweils über Wellen (24, 25) um eine Achse drehbar gelagert sind, die mit einer Mittelachse (X) durch die ortsfesten Lagermittel (30, 31) fluchten.

4. Vorrichtung nach einem der Ansprüche 2 oder 3, **dadurch gekennzeichnet**, daß die Massenelemente (18, 19) über Kopplungsmittel (20, 21) mit den Befestigungs-Enden (14, 15) der Stabilisatorschenkel (12, 13) verbindbar sind, wobei die Kopplungsmittel (20, 21) so ausgebildet sind, daß im wesentlichen ausschließlich in der zu der Mittelachse (X) senkrechten Ebene wirkende Kräfte zwischen den Massenelementen (18, 19) und den Stabilisatorschenkeln (12, 13) übertragbar sind.

5. Vorrichtung nach einem der Ansprüche 3 oder 4, **dadurch gekennzeichnet**, daß die Massenelemente (18, 19) mit Ausgleichsmassenelementen (33, 34) versehen sind, die auf der zur Mittelachse (X) gegenüberliegenden Seite der Massenelemente (18, 19) angeordnet und hinsichtlich ihrer Abmessungen derart ausgestaltet sind, daß die Massenelemente (18, 19) im wesentlichen um ihre Drehachse statisch ausgewuchtet sind.

6. Vorrichtung nach Anspruch 4, **dadurch gekennzeichnet**, daß die Kopplungsmittel (20, 21) Wälzlager (50), insbesondere Pendelrollenlager umfassen, deren Drehachsen im wesentlichen parallel zur Mittelachse (X) verlaufen.

7. Vorrichtung nach Anspruch 2, **dadurch gekennzeichnet**, daß die Massenelemente (18, 18' ; 19) jeweils über als Lager ausgebildete Befestigungselemente (23, 23') drehbar direkt an Befestigungsenden (14, 15) der Stabilisatorschenkel (12, 13) angebracht sind, und daß der Schwingerreger (27) über Kopplungsmittel (77-87) mit einem Stabilisatorschenkel (12) verbindbar ist.

8. Vorrichtung nach Anspruch 7, **dadurch gekennzeichnet**, daß die Kopplungsmittel einen, mit seinem einen Ende am Stabilisatorschenkel (12) festlegbaren Koppelhebel (81) umfassen, der mit seinem anderen Ende in einem Lager (77) um eine Achse schwenkbar gehalten ist, die senkrecht zu einer Mittelachse (X) durch die ortsfesten Lagermittel (30, 31) verläuft und diese schneidet, wobei das Lager (77) mit einem hin- und herdrehenden Schwingerreger (27) verbunden ist, dessen Drehachse mit der Mittelachse (X) fluchtet.

9. Vorrichtung nach einem der Ansprüche 2 bis 8, **dadurch gekennzeichnet**, daß der Schwingerreger einen Hydraulik- oder Elektromotor, vorzugsweise einen Scheibenläufermotor (27) umfaßt.

10. Vorrichtung nach einem der Ansprüche 2 bis 9, **dadurch gekennzeichnet**, daß der Schwingerreger (27) mit einem Meßfühler (Winkelgeber 35) zum Abtasten der Schwingbewegung verbunden ist.

11. Vorrichtung nach Anspruch 10, **dadurch gekennzeichnet**, daß der Meßfühler (35) mit einer Signalausgangsleitung auf einen Ist-Werteingang eines Motorreglers (67-69) zum Regeln der Motorleistung bzw. Amplitude auf einen Soll-Wert geführt ist.

12. Vorrichtung nach Anspruch 11, **dadurch gekennzeichnet**, daß der Meßfühler einen Drehwinkelgeber (35) umfaßt und der Regler (27-69) so ausgebildet ist, daß die Drehbewegungen des Motors (27) zu einem fest einstellbaren Winkelwert (Nullpunkt) mit symmetrischen Amplituden erfolgen.

## Claims

1. Method of testing vehicle stabilisers, which are mounted on fixed bearings and whose arms are moved (rotarily) in opposite directions by vibration exciters, the arms being excited, together with the movable mass elements attached thereto, at the (first) resonance frequency of the mass spring system, to perform antiphase oscillations about a fixed zero point by the vibration exciter.

2. Apparatus for testing vehicle stabilisers with fixed bearing means for mounting a stabiliser and with drive means for the (rotary) movement of one stabiliser arm relative to the other stabiliser arm, in which apparatus the drive means comprise two movable mass elements (18, 19) for the formation of a mass spring resonator, which are so formed, movably mounted and one of which in each case is connected to an arm (12, 13) of the stabiliser (10) in such a manner that they can be made to perform, via a connected vibration exciter (27), together with the stabiliser arms (12, 13), antiphase vibrations, whose frequency is substantially determined by the masses of the mass elements (18, 19) and the spring force of the stabiliser (10).

3. Apparatus according to claim 2, characterised in that the mass elements (18, 19) are each mounted via shafts (24, 25) so as to rotate about an axis which is aligned with a central axis (X) by the fixed bearing means (30, 31).

4. Apparatus according to one of claims 2 or 3, characterised in that the mass elements (18, 19) are connectable via coupling means (20, 21) to the fixing ends (14, 15) of the stabiliser arms (12, 13), the coupling means (20, 21) being so formed that forces acting substantially only in the plane perpendicular to the central axis (X) are transmissible between the mass elements (18, 19) and the stabiliser arms (12, 13).

5. Apparatus according to one of claims 3 or 4, characterised in that the mass elements (18, 19) are provided with balancing mass elements (33, 34), which are mounted on the side of the mass elements (18, 19) opposite the central axis (X) and have such dimensions that the mass elements (18, 19) are substantially counterbalanced in a static manner about their axis of rotation.

6. Apparatus according to claim 4, characterised in that the coupling means (20, 21) comprise roller bearings (50), in particular pendulum roller bearings, whose axes of rotation are substantially parallel to the central axis (X).

7. Apparatus according to claim 2, characterised in that the mass elements (18, 18' ; 19) are each mounted directly on fixing ends (14, 15) of the stabiliser arms (12, 13) so as to rotate via fixing elements (23, 23') formed as bearings, and in that the vibration exciter (27) is connectable via coupling means (77-87) to a stabiliser arm (12).

8. Apparatus according to claim 7, characterised in that the coupling means comprise a coupling lever (81), whose end is fixable to the stabiliser arm (12) and which is held by its other end in a bearing (77) so as to pivot about an axis, which runs perpendicular to a central axis (X) and through the fixed bearing means (30, 31) and intersects the latter, the bearing (77) being connected to a vibration exciter (27) which swivels to and fro and whose axis of rotation is aligned with the central axis (X).

9. Apparatus according to one of claims 2 to 8, characterised in that the vibration exciter comprises a hydraulic or electric motor, preferably a disc armature motor (27).

10. Apparatus according to one of claims 2 to 9, characterised in that the vibration exciter (27) is connected to a measurement sensor (angle transmitter 35) for scanning the vibration movement.

11. Apparatus according to claim 10, characterised in that the measurement sensor (35) is guided with a signal output line to an actual value input of a motor regulator (67-69) for controlling the motor power or amplitude to a reference value.

12. Apparatus according to claim 11, characterised in that the measurement sensor comprises a swing angle transmitter (35) and the regulator (27-69) is so formed that the revolutions of the motor (27) occur at an angular value (zero) which can be set permanently and which has symmetrical amplitudes.

## Revendications

1. Procédé pour essayer des barres anti-roulis de véhicules, qui sont montées dans des paliers fixes et dont les branches sont mues (en rotation) l'une par rapport à l'autre par des générateurs de vibrations, dans lequel les branches, avec les éléments massiques mobiles qui leur sont couplés, sont excitées par le générateur de vibrations pour vibrer en opposition de phases autour du point neutre à la (première) fréquence de résonance du système masse-ressort.

2. Dispositif pour essayer des barres anti-roulis de véhicules, comprenant des moyens de paliers fixes pour fixer une barre anti-roulis et des moyens d'entraînement pour entraîner (en rotation) une branche de la barre anti-roulis par rapport à l'autre branche de la barre anti-roulis, dans lequel les moyens d'entraînement comportent deux éléments massiques mobiles (18, 19) pour former un résonateur masse-ressort, chacun étant relié à une branche (12, 13) de la barre anti-roulis (10), ces éléments étant réalisés et disposés de telle sorte qu'un générateur de vibrations accouplé (27) les fasse vibrer avec les branches (12, 13) de la barre anti-roulis en opposition de phases, la fréquence de ces vibrations étant sensiblement déterminée par les masses de ces

<p align="center">7</p>

éléments massiques (18, 19) et l'élasticité de la barre anti-roulis (10).

3. Dispositif selon la revendication 2, caractérisé en ce que les éléments massiques (18, 19) sont montés respectivement sur des arbres (24, 25) de façon à tourner autour d'un axe coïncidant avec un axe médian (X) passant par les moyens de paliers fixes (30, 31).

4. Dispositif selon l'une des revendications 2 ou 3, caractérisé en ce que les éléments massiques (18, 19) peuvent être reliés par l'intermédiaire de moyens d'accouplement (20, 21) aux extrémités de fixation (14, 15) des branches (12, 13) de la barre anti-roulis, les moyens d'accouplement (20, 21) étant réalisés de telle sorte qu'il ne peut être pratiquement transmis entre les éléments massiques (18, 19) et les branches (12, 13) de la barre anti-roulis que des forces agissant exclusivement dans le plan perpendiculaire à l'axe médian (X).

5. Dispositif selon l'une des revendications 3 ou 4, caractérisé en ce que les éléments massiques (18,19) sont équipés de masselottes d'équilibrage (33, 34) qui sont disposées sur le côté des éléments massiques (18, 19) opposé à l'axe médian (X) et dont les dimensions sont telles que les éléments massiques (18, 19) sont équilibrés statiquement sensiblement autour de leur axe de rotation.

6. Dispositif selon la revendication 4, caractérisé en ce que les moyens d'accouplement (20, 21) comportent des paliers à roulement, notamment des roulements à rotule, dont les axes de rotation sont sensiblement parallèles à l'axe médian (X).

7. Dispositif selon la revendication 2, caractérisé en ce que les éléments massiques (18, 18' ; 19) sont fixés à rotation directement sur les extrémités de fixation (14, 15) des branches (12, 13) de la barre anti-roulis (10) respectivement par l'intermédiaire d'éléments de fixation (23, 23') réalisés sous forme de paliers, et en ce que le générateur de vibrations (27) peut être relié à une branche (12) de la barre anti-roulis par l'intermédiaire de moyens d'accouplement (77-87).

8. Dispositif selon la revendication 7, caractérisé en ce que les moyens d'accouplement comportent un levier d'accouplement (81), dont une extrémité peut être fixée sur la branche (12) de la barre anti-roulis et dont l'autre extrémité est tenue dans un palier (77) de façon à y tourner autour d'un axe perpendiculaire à l'axe médian (X) passant par les moyens de paliers fixes (30, 31) et coupant cet axe (X), le palier (77) étant relié à un générateur de vibrations (27) tournant dans les deux sens, dont l'axe de rotation coïncide avec l'axe médian (X).

9. Dispositif selon l'une des revendications 2 à 8, caractérisé en ce que le générateur de vibrations comporte un moteur hydraulique ou électrique, de préférence un moteur à entrefer plat (27).

10. Dispositif selon l'une des revendications 2 à 9, caractérisé en ce que le générateur de vibrations (27) est relié à un capteur de mesure (capteur angulaire 35) pour explorer le mouvement de vibration.

11. Dispositif selon la revendication 10, caractérisé en ce que le signal du capteur de mesure (35) est amené par l'intermédiaire d'une canalisation de sortie de signaux à l'entrée de valeur réelle d'un régulateur de moteur (67-69) pour régler la puissance ou l'amplitude du moteur sur une valeur de consigne.

12. Dispositif selon la revendication 11, caractérisé en ce que le capteur de mesure comporte un capteur angulaire (35) et le régulateur (67-69) est réalisé de telle sorte que les mouvements de rotation du moteur (27) s'effectuent avec des amplitudes symétriques par rapport à une position angulaire (point zéro) qui peut être réglée fixe.

FIG. 1

EP 0 344 194 B1

FIG. 2

FIG. 3

FIG. 4

FIG. 5

FIG. 6

FIG. 7

FIG. 8

FIG.9